# EUROPÄISCHE PATENTANMELDUNG

(11) **EP 1 289 206 A2**
(43) Veröffentlichungstag der Anmeldung: **05.03.2003**
(21) Anmeldenummer: 02019129.2
(22) Anmeldetag: 29.08.2002
(51) Int. Cl.: H04L 12/56

(54) **Vorrichtung zur Anbindung eines schnurgebundenen Telekommunikationsgeräts an ein Telekommunikationsnetz**

(30) Priorität: 29.08.2001 DE 20114267 U
(71) Anmelder: Dosch & Amand Systems AG, 81679 München (DE)
(72) Erfinder: Dosch,Franz., Scheinerstrasse, 9. 81679 Munchen (DE)
(74) Vertreter: Grünecker, Kinkeldey, Stockmair & Schwanhäusser Anwaltssozietät

(57) **Zusammenfassung**

Die Erfindung betrifft eine Vorrichtung zur Anbindung eines schnurgebundenen Telekommunikationsgeräts an ein Telekommunikationsnetz (PSTN), wobei die Anbindungsvorrichtung mit dem schnurgebundenen Telekommunikationsgerät drahtgebunden Daten austauschen kann, welche eine Einrichtung zur Herstellung einer Datenverbindung mit einem Schnurlostelekommunikationsgerät umfasst. Weiterhin umfasst die Erfindung eine Umsetzeinrichtung zum Umsetzen von ersten Daten von dem schnurgebundenen Telekommunikationsgerät in zweite Daten für das schnurlose Telekommunikationsgerät und/oder von zweiten Daten von dem Schnurlostelekommunikationsgerät in erste Daten für das schnurgebundene Telekommunikationsgerät. Hierbei ist die Umsetzeinrichtung eingerichtet zum Übertragen der zweiten Daten an das oder von dem Schnurlostelekommunikationsgerät in einer Weise, dass dieses die zweiten Daten per Funk an eine an das Telekommunikationsnetz angeschlossenen Basisstation sendet oder diese von der Basisstation empfängt.

## Beschreibung

Die Erfindung betrifft eine Vorrichtung zur Anbindung eines schnurgebundenen Telekommunikationsgeräts an ein Telekommunikationsnetz und insbesondere die Anbindung eines schnurgebundenen Telekommunikationsgeräts mit Hilfe eines Schnurlosfunksystems. Die Erfindung betrifft in einer bevorzugten Ausgestaltung ferner eine entsprechend angepasste Ladevorrichtung für ein Schnurlostelekommunikationsgerät.

Zu Telekommunikationszwecken in Gebäuden und Wohneinheiten werden seit längerem bevorzugt schnurlose Funksysteme verwendet, wie zum Beispiel DECT-Telefonsysteme (Digital Enhanced Cordless Telecommunication). Andere Funksysteme sind beispielsweise Bluetooth, HomeRF, 802.11/WLAN (Wireless Local Area Network), PHS (Personal Handy System), PWT (Personal Wireless Telecommunication), CT-1, CT-2 (Cordless Telephone) etc.

Solche Schnurlostelefonsysteme ermöglichen Telefonie und Datenübertragung im Nahfunkbereich, d. h. innerhalb weniger hundert Meter. Hierdurch wird eine Funkanbindung insbesondere innerhalb eines Gebäudes bei voller Mobilität des Funkteilnehmers gewährleistet.

Wie bereits erwähnt, finden die genannten Systeme nicht nur für die Telefonie Anwendung sondern auch zur Datenkommunikation. Lösungen hierfür sind bereits in Form von Funkmodems des gewählten Standards in Form von PC-Karten (PCMCIA, ISA, PCI oder USB) verfügbar und werden vorwiegend zur Internetanbindung verwendet. Auch Webpads nutzen Schnurlossysteme zur Datenkommunikation.

In den vorgenannten Funksystemen wird die Kommunikation am Übergabepunkt der externen Telekommunikationsleitung an das hauseigene Verteilsystem durch sogenannte Basisstationen terminiert und über das in der Basisstation implementierte Funksystem im Hause schnurlos verteilt. In den überwiegenden Fällen der mobilen In-Haus-Kommunikation stellen diese Funksysteme eine zufriedenstellende Nutzung von Telefonie über sogenannte Handsets bzw. von Datenkommunikation sicher. Der Einsatz von digitalen Kommunikationssystemen wie ISDN führt jedoch immer wieder zu Problemen in Schnurlossystemen, wenn bestehende Analoggeräte wie z. B. Faxgeräte und Anrufbeantworter an die kabellose Verteilung angebunden werden sollen.

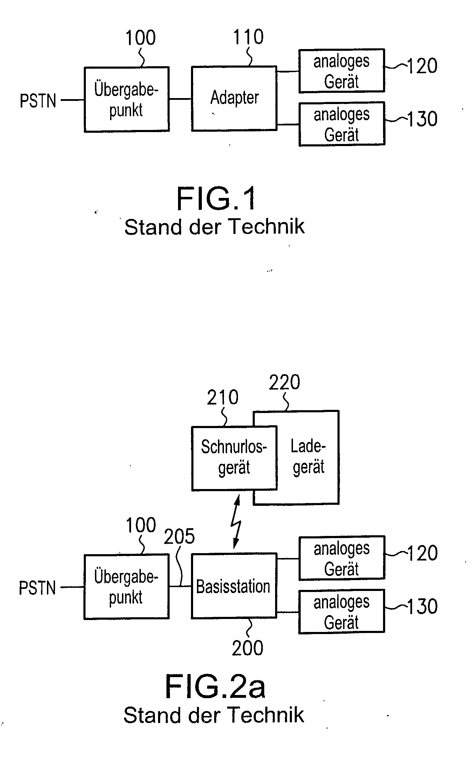

In Figur 1 ist für den Fall eines nicht schnurlosen Systems dargestellt, wie analoge Geräte üblicherweise an das Telekommunikationsnetz angeschlossen sind. Zur Verbindung mit dem externen Telefonnetz PSTN (Public Switched Telephone Network) wird zunächst ein Übergabepunkt 100 bereitgestellt, der in ISDN-Netzen beispielsweise durch den NTBA gegeben ist. Um analoge Geräte 120, 130 anzuschließen, wird für diese Geräte ein analoger Telekommunikationsanschluss am Übergabepunkt 100 über einen zusätzlichen Telekommunikationsadapter 110 bereitgestellt.

Diese Anordnung ist nachteilig, da für die Anbindung eines analogen Geräts 120, 130 ein Adapter 110 angeschafft werden muss, wodurch zusätzliche Kosten entstehen. Weiterhin sind die analogen Geräte 120, 130 an den Ort des Adapters 110 und damit des Übergabepunkts 100 gebunden, so dass beispielsweise der Nutzer von Telefaxgeräten zum Senden und Empfangen von Briefen zum Ort des Telekommunikationsanschlusses gehen muss. Natürlich kann das analoge Gerät 120, 130 auch über eine Verlängerungsleitung an den Adapter 110 angeschlossen werden, was prinzipiell auch einen weiter entfernten Standort des analogen Gerätes ermöglicht. Jedoch ist dies insbesondere in großflächigen Räumlichkeiten oder gar mehrstöckigen Gebäuden nachteilig, da für die Leitungsverlegung höhere Kosten anfallen.

Ein weiteres prinzipielles Problem mit der in Figur 1 gezeigten Anordnung stellt die Standortgebundenheit dar. Da die analogen Geräte leitungsgebunden sind, ist jeglicher Standortwechsel umständlich und mit zusätzlichen Kosten verbunden. Deshalb wurden auch im Stand der Technik bereits schnurlose Möglichkeiten gefunden, um analoge Geräte anzubinden. Ein solches System ist in Figur 2a gezeigt. Am Übergabepunkt 100 ist hierbei beispielsweise eine DECT-ISDN-Basisstation über eine Verbindung 205 angeschlossen. Mit der Basisstation 200 steht ein Schnurlostelekommunikationsgerät 210 in Funkkontakt. Das Schnurlosgerät 210 ist beispielsweise ein Handgerät oder Handset, kann aber auch ein Notebook mit Funkmodem sein oder ein Webpad.

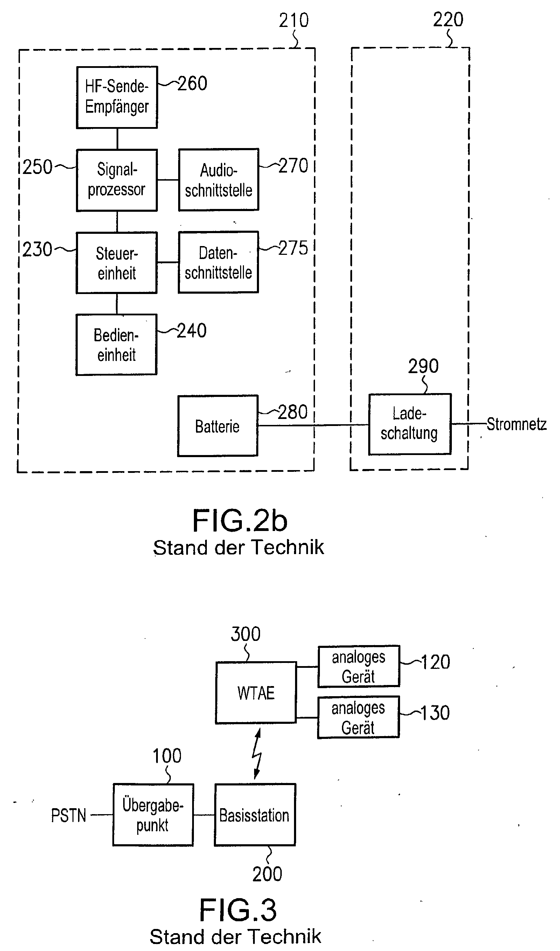

Das Schnurlosgerät 210 ist in den Figuren 2a und 2b zusammen mit einem Ladegerät 220 gezeigt. Es umfasst eine Steuereinheit 230, die mit einem Signalprozessor 250 verbunden ist. Der Signalprozessor 250 ist wiederum mit einer Hochfrequenz-Sende-/Empfängereinrichtung 260 sowie mit einer Audioschnittstelle 270 verbunden. Ferner verfügt das Schnurlosgerät 210 über eine Bedieneinheit 240, die die Benutzerschnittstelle darstellt. Schließlich kann ein Schnurlosgerät auch über eine Datenschnittstelle 275 verfügen. Von diesen genannten Einheiten getrennt, verfügt das Schnurlosgerät über eine Batterie bzw. einen Akkumulator 280, der die Stromversorgung des Schnurlosgeräts sicherstellt, wenn es mobil betrieben wird. Die Batterie 280 wird von einer Ladeschaltung 290 des Ladegeräts 220 mit einem Ladestrom versehen, wenn das Schnurlosgerät 210 mit dem Ladegerät 220 verbunden ist. Üblicherweise ist das Ladegerät 220 als Ladeschale ausgeführt, auf die das Handgerät aufgelegt oder eingesetzt wird.

Um an ein solches Schnurlossystem analoge Geräte 120, 130 anzuschließen, verfügt die Basisstation 200 über analoge Telekommunikationsanschlüsse, so dass beispielsweise ein analoges Faxgerät an das digitale Netz angeschlossen werden kann. Jedoch wird hierdurch gegenüber der in Figur 1 gezeigten Anordnung kein wirklicher Vorteil für den Betrieb des analogen Geräts 120, 130 erwirkt, da das Gerät nach wie vor ortsfest und kabelgebunden ist. Zwar kann die Basisstation 200 vom Übergabepunkt 100 durch eine verlängerte Leitung 205 an entfernten Orten positioniert werden, jedoch entstehen hierdurch wie in der oben beschriebenen Anordnung nicht unerhebliche Kosten. Außerdem kann der Nutzer des analogen Geräts 120, 130 auch in der Anordnung von Figur 2a das Gerät nicht mobil verwenden, obwohl ein Funksystem zur Anwendung kommt.

Daher wurden im Stand der Technik sogenannte WTAE (Wireless TAE) 300 als zusätzliche DECT-Mobilgeräte entwickelt. Ein solches System ist in Figur 3 dargestellt. Schnurlose TAE-Boxen 300 mit Funksystem und analoger Telekommunikationsschnittstelle (a/b-Port) ermöglichen zwar die Unabhängigkeit des Aufstellungsortes für analoge Geräte 120, 130, wie etwa Faxgeräte oder Anrufbeantworter. Sie sind aber systembedingt sehr teuer, da in diese Geräte die gesamte Funktechnik und die Übertragungssoftware integriert werden muss. Aufgrund des unausgewogenen Preis-/Leistungsverhältnisses sind solche Produkte daher nur schwer zu vermarkten und kaum gewinnbringend zu verkaufen.

Der Erfindung liegt daher die Aufgabe zugrunde, eine Möglichkeit anzugeben, wie analoge Telekommunikationsgeräte in kostengünstiger Weise in ein Schnurlos-Funksystem so eingebunden werden können, dass der Nutzer des analogen Geräts von der durch das Funksystem bereitgestellten Mobilität profitieren kann.

Diese Aufgabe wird durch die in den unabhängigen Ansprüchen definierten Erfindung gelöst.

Die Erfindung stellt eine Vorrichtung bereit, mit deren Hilfe ein schnurgebundenes Telekommunikationsgerät an ein Telekommunikationsnetz angeschlossen wird, indem eine Datenverbindung von dem schnurgebundenen Telekommunikationsgerät zu einem Schnurlostelekommunikationsgerät hergestellt wird und die Datenkommunikation zum Netz dann per Funk durch das Schnurlostelekommunikationsgerät bewerkstelligt wird. Hierdurch wird der Vorteil erzielt, dass die Vorrichtung ortsungebunden ist und das schnurgebundene Telekommunikationsgerät somit an beliebigen Orten innerhalb des Funkgebiets an das Telekommunikationsnetz angebunden werden kann. Ferner ergibt sich ein drastischer Kostenvorteil dadurch, dass die Vorrichtung selbst im Gegensatz zu den vorgenannten schnurlosen TAE-Boxen keine Sende-/Empfangseinheit aufweisen muss, da hierfür die im Schnurlostelekommunikationsgerät bereits vorhandenen Schaltkreise und Softwaresteuerungen verwendet werden können. Die erfindungsgemäße Vorrichtung lässt sich daher zu einem Preis von etwa 15% bis 20% des Preises einer schnurlosen TAE-Box herstellen.

Bevorzugte Ausgestaltungen der Erfindung sind in den Unteransprüchen definiert.

Besonders vorteilhaft ist die Ausgestaltung der erfindungsgemäßen Vorrichtung als Ladegerät. Ladeschalen für Schnurlos-Handsets sind bereits zahlreich im Handel und lassen sich kostengünstig herstellen. Solche Ladeschalen brauchen erfindungsgemäß lediglich um einen Anpassungsschaltkreis ergänzt zu werden, an den das Telefaxgerät beziehungsweise der Anrufbeantworter etc. angeschlossen werden kann. Ferner muss das Ladegerät um einen Steckverbinder ergänzt werden, um die Datenverbindung zum Schnurlostelefon aufzubauen, wenn dieses in die Ladeschale eingelegt ist. Diese zusätzlich in das Ladegerät zu integrierenden Komponenten sind kostengünstig und leicht einzubauen.

Ein weiterer Vorteil der Verwendung eines Ladegeräts zur Anbindung eines schnurgebundenen Telekommunikationsgeräts an ein Telekommunikationsnetz ergibt sich aus dem Umstand, dass ein bereits vorhandenes Gerät zusätzlich zu einem völlig anders gearteten Zweck, nämlich dem der Datenkommunikation, verwendet wird. Der Benutzer braucht daher kein zusätzliches Gerät zur Anbindung beispielsweise eines analogen Telefaxgeräts anzuschaffen, da er hierfür das bereits zu Ladezwecken vorhandene, erfindungsgemäß ausgestaltete Ladegerät verwenden kann.

Neben der Anbindung eines schnurgebundenen Telekommunikationsgeräts entsteht ein weiterer Vorteil durch die Möglichkeit, zusätzlich eine Computerschnittstelle vorzusehen. Somit können auch ortsgebundene Computer in einfacher und kostengünstiger Weise beispielsweise an das Internet angeschlossen werden.

Die Erfindung wird nun unter Bezugnahme auf die beigefügten Zeichnungen näher erläutert, in denen:
Figur 1 den direkten Anschluss eines analogen Geräts an ein Telekommunikationsnetz nach dem Stand der Technik verdeutlicht;
Figur 2a die Anbindung eines analogen Geräts an ein Telekommunikationsnetz mittels einer Basisstation nach dem Stand der Technik verdeutlicht;
Figur 2b die Komponenten eines Schnurlosgeräts und eines Ladegeräts nach dem Stand der Technik verdeutlicht;
Figur 3 die Anbindung eines analogen Geräts an ein Telekommunikationsnetz mittels einer schnurlosen TAE-Box nach dem Stand der Technik verdeutlicht;
Figur 4a die Anbindung eines schnurgebundenen Telekommunikationsgeräts an ein Telekommunikationsnetz gemäß einer ersten Ausgestaltung der Erfindung verdeutlicht;
Figur 4b die Komponenten eines Schnurlosgeräts und eines Ladegeräts gemäß einer bevorzugten Ausgestaltung der Erfindung verdeutlicht;
Figur 5a ein weiteres bevorzugtes Ausführungsbeispiel der Erfindung verdeutlicht;
Figur 5b die Komponenten eines Schnurlosgeräts und eines Ladegeräts gemäß des Ausführungsbeispiels von Figur 5a verdeutlicht;
Figur 6a ein weiteres bevorzugtes Ausführungsbeispiel der Erfindung verdeutlicht; und
Figur 6b die Komponenten eines Schnurlosgeräts und eines Ladegeräts gemäß der Anordnung von Figur 6a verdeutlicht.

Bevorzugte Ausgestaltungen der Erfindung werden nun unter Bezugnahme auf die beigefügten Zeichnungen näher erläutert, wobei sich entsprechende Komponenten mit gleichen Bezugszeichen versehen sind.

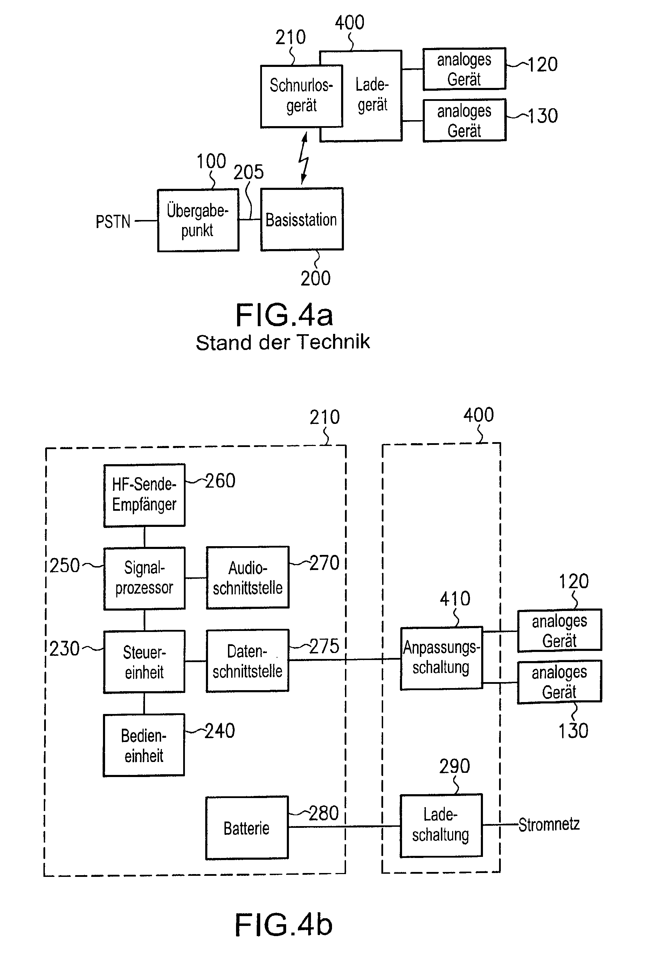

Figur 4a zeigt eine bevorzugte Ausgestaltung der Anbindung eines analogen Geräts 120, 130, wie etwa eines Telefaxgeräts oder eines Anrufbeantworters, an ein Telekommunikationsnetz PSTN. Über den Übergabepunkt 100 ist mittels einer Verbindung 205 eine Basisstation 200 mit dem Netz verbunden. Die Basisstation ist eine Schnurlosbasisstation, die vorzugsweise dem DECT-Standard genügt. Die Erfindung lässt sich jedoch auch auf andere Funksysteme wie etwa Bluetooth, HomeRF, 802.11/WLAN etc. anwenden.

In dem Funksystem ist ferner ein Schnurlosgerät 210 vorgesehen, das in Funkkontakt zu der Basisstation 200 treten kann. Das Schnurlosgerät ist beispielsweise ein Handset oder auch ein Webpad. Ferner ist ein Ladegerät 400 vorhanden, in das das Schnurlosgerät 210 eingelegt oder eingesetzt werden kann, um die im Schnurlosgerät vorhandene Batterie zu laden.

Um das schnurgebundene Telekommunikationsgerät 120, 130 an das Telekommunikationsnetz PSTN anzubinden, wird es mit dem Ladegerät 400 verbunden und das Schnurlosgerät 210 in das Ladegerät 400 eingesetzt. Das analoge Gerät 120, 130 kann dann Daten in das Telekommunikationsnetz aussenden, indem es die Daten an das Ladegerät schickt, das Ladegerät diese Daten umsetzt in Daten, die an das Schnurlosgerät 210 weitergeleitet werden, das Schnurlosgerät diese Daten per Funkkontakt an die Basisstation 200 übermittelt, und die Basisstation die Daten über den Übergabepunkt 100 in das Netz schickt. In umgekehrter Richtung können Daten aus dem Netz über den Übergabepunkt 100 von der Basisstation 200 per Funk an das Schnurlosgerät 210 übersandt werden, das die Daten dann an das Ladegerät 400 übermittelt. Das Ladegerät 400 setzt die Daten in für das analoge Gerät 120, 130 verständliche Daten um und leitet diese an das Gerät weiter.

Die Komponenten des Schnurlosgeräts 210 und des erfindungsgemäßen Ladegeräts 400 sind in Figur 4b näher erläutert. Neben den bereits im Zusammenhang mit Figur 2b erläuterten Komponenten ist in der erfindungsgemäßen Anordnung von Figur 4b im Ladegerät 400 eine Anpassungsschaltung 410 vorgesehen, an die das analoge Gerät 120, 130 angeschlossen ist oder angeschlossen werden kann. Ferner ist die Anpassungsschaltung 410 mit der Datenschnittstelle 275 des Schnurlosgeräts verbunden. Die Anpassungsschaltung 410 übernimmt den Datentransfer zwischen Schnurlosgerät 210 und analogem Gerät 120, 130.

In einer bevorzugten Ausgestaltung der Erfindung ist die Anpassungsschaltung 410 ferner eingerichtet, um das Schnurlosgerät 210 über die Datenschnittstelle 275 und die Steuereinheit 230 so zu betreiben, dass das Schnurlosgerät den gewünschten Funkkontakt zur Basisstation 200 aufbaut, unterhält und abbaut. Dies gestattet den normalen Betrieb des analogen Geräts in der Weise, dass es zu Beginn bzw. am Ende der Telekommunikationsverbindung ein Verbindungsaufbau- bzw. ein Verbindungsabbausignal erzeugt, wobei die Anpassungsschaltung 410 dann in Erwiderung auf das Verbindungsaufbau- oder Verbindungsabbausignal die Funkverbindung zur Basisstation 200 aufbaut bzw. abbaut. In einer anderen bevorzugten Ausgestaltung verfügt das Ladegerät nicht über eine solche Steuerschaltung zur Verbindungssteuerung, so dass der Benutzer zum Auf- und Abbau der Funkverbindung das Schnurlosgerät bedienen muss. In dieser Ausführung kann das Ladegerät noch einmal kostengünstiger gefertigt werden.

Wie der Figur 4b entnommen werden kann, wird das erfindungsgemäße Ladegerät 400 über den eigentlichen Zweck, nämlich dem Aufladen der Batterie 280 des Schnurlosgeräts 210, nun auch zu Zwecken der Datenkommunikation verwendet. Dabei kann jedoch der vorhandene teure DECT-Übertragungsteil des Schnurlosgeräts 210 verwendet werden, so dass ein entspechender Schaltkreis im Ladegerät 400 nicht erforderlich ist. Die Stromversorgung findet hierbei durch das Ladegerät 400 statt.

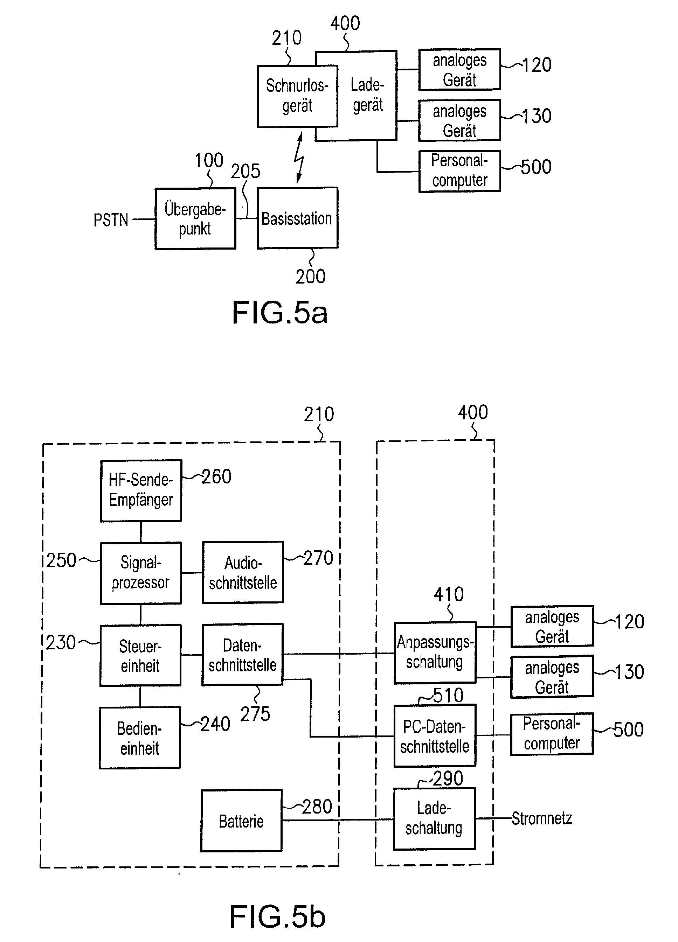

Eine weitere bevorzugte Ausgestaltung der Erfindung wird nun unter Bezugnahme auf die Figuren 5a und 5b erläutert. Dieses Ausführungsbeispiel unterscheidet sich von dem vorgenannten dadurch, dass das Ladegerät 400 zusätzlich um eine Computerschnittstelle erweitert worden ist, um einen Personalcomputer 500 an das Telekommunikationsnetz PSTN anzubinden. Zu diesem Zweck verfügt das Ladegerät 400 über eine PC-Datenschaltung 510, die mit der Datenschnittstelle 275 des Schnurlosgeräts 210 verbunden ist. Die PC-Datenschaltung 510 ist vorzugsweise mit einer USB-Schnittstelle ausgestattet, um den Personalcomputer 500 an das Ladegerät anzuschließen. Anstelle einer USB-Schnittstelle können jedoch auch andere Computerschnittstellen verwendet werden. Mit Hilfe der Schnittstelle kann somit ein Personalcomputer 500 angeschlossen werden, der über das eingesteckte Schnurlosgerät 210 Verbindung zur Basisstation 200 und somit Verbindung zur externen Telefonleitung erhält. Personalcomputer können somit über das Ladegerät 400 einen Internetzugang erhalten.

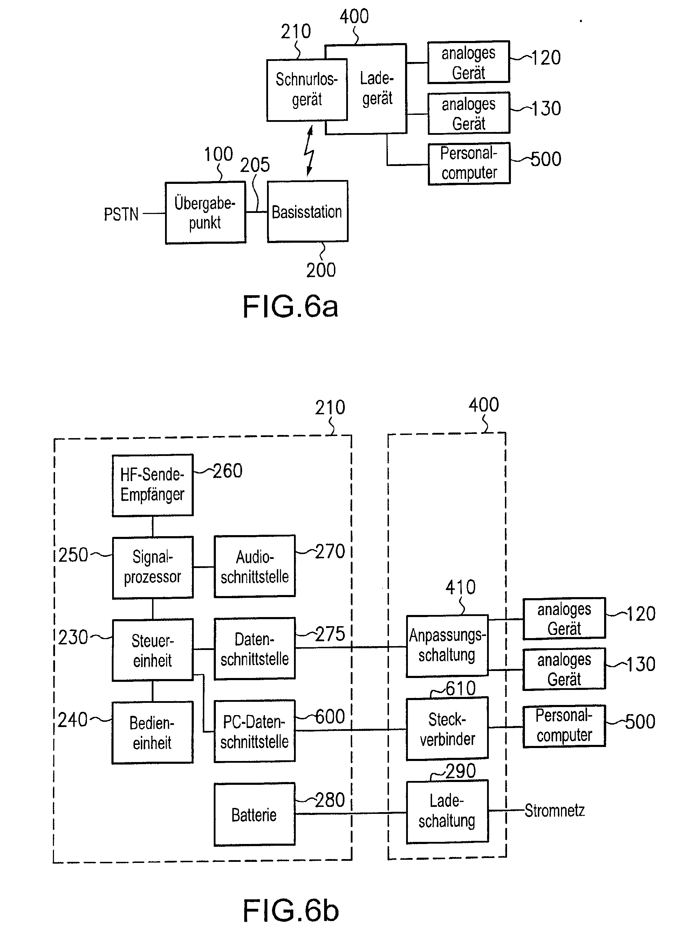

Eine weitere bevorzugte Ausgestaltung, die ebenfalls die Anbindung eines Personalcomputers erlaubt, ist in den Figuren 6a und 6b gezeigt. In dieser Anordnung wird ein Schnurlosgerät 210 verwendet, wie etwa ein Webpad, das bereits über eine PC-Datenschnittstelle 600 verfügt. In diesem Fall braucht im Ladegerät 400 lediglich ein geeigneter Steckverbinder 610 wie beispielsweise ein USB-Stecker vorgesehen zu sein, um den Personalcomputer 500 anzuschließen.

Aus den vorhergehend beschriebenen Ausführungsbeispielen wird deutlich, dass die Erfindung die Anbindung eines schnurgebundenen Telekommunikationsgeräts an ein Telekommunikationsnetz unter Zuhilfenahme eines Schnurlossystems in kostengünstiger Weise gestattet. Dabei ist die Erfindung nicht auf die angeführten Beispiele eines Telefaxgeräts oder eines Anrufbeantworters beschränkt. Ferner können andere Geräte als Ladegeräte verwendet werden. Beispielsweise kann ein separates Gerät vorgesehen werden, das mit dem analogen Gerät verbunden ist und in das das Schnurlosgerät einlegt wird, ohne dass ein Ladestrom für die Batterie des Schnurlosgeräts bereitgestellt wird. Ferner können analoge Geräte so ausgestaltet sein, dass sie in ihrem Gehäuse eine Schale oder einen Schlitz zur Aufnahme des Schnurlosgeräts 210 aufweisen, so dass das Schnurlostelefon zur Anbindung des analogen Geräts an das Netz lediglich eingesetzt zu werden braucht.

## Patentansprüche

1. Vorrichtung zur Anbindung eines schnurgebundenen Telekommunikationsgeräts (120, 130) an ein Telekommunikationsnetz (PSTN), wobei die Anbindungsvorrichtung mit dem schnurgebundenen Telekommunikationsgerät drahtgebunden Daten austauschen kann, umfassend:
eine Einrichtung (410) zur Herstellung einer Datenverbindung mit einem Schnurlostelekommunikationsgerät (210); und
eine Umsetzeinrichtung (410) zum Umsetzen von ersten Daten von dem schnurgebundenen Telekommunikationsgerät in zweite Daten für das schnurlose Telekommunikationsgerät und/oder von zweiten Daten von dem Schnurlostelekommunikationsgerät in erste Daten für das schnurgebundene Telekommunikationsgerät;
wobei die Umsetzeinrichtung eingerichtet ist zum Übertragen der zweiten Daten an das oder von dem Schnurlostelekommunikationsgerät in einer Weise, dass dieses die zweiten Daten per Funk an eine an das Telekommunikationsnetz angeschlossenen Basisstation (200) sendet oder diese von der Basisstation empfängt.

2. Vorrichtung nach Anspruch 1, weiterhin umfassend:
eine Ladeschaltung (290) zum Erzeugen eines Ladestroms zum Aufladen eines Energiespeichers (280) des Schnurlostelekommunikationsgeräts (210).

3. Vorrichtung nach Anspruch 1 oder 2, wobei das Telekommunikationsnetz ein ISDN-Netz und das schnurgebundene Telekommunikationsgerät ein analoges Telekommunikationsgerät ist.

4. Vorrichtung nach einem der Ansprüche 1 bis 3, wobei das Schnurlostelekommunikationsgerät ein Handset ist.

5. Vorrichtung nach einem der Ansprüche 1 bis 3, wobei das Schnurlostelekommunikationsgerät ein Webpad ist.

6. Vorrichtung nach einem der Ansprüche 1 bis 5, wobei das schnurgebundene Telekommunikationsgerät ein Telefaxgerät ist.

7. Vorrichtung nach einem der Ansprüche 1 bis 6, wobei das schnurgebundene Telekommunikationsgerät ein Anrufbeantworter ist.

8. Vorrichtung nach einem der Ansprüche 1 bis 7, wobei die Funkverbindung zwischen dem Schnurlostelekommunikationsgerät und der Basisstation dem DECT-Standard genügt.

9. Vorrichtung nach einem der Ansprüche 1 bis 8, wobei die Funkverbindung zwischen dem Schnurlostelekommunikationsgerät und der Basisstation dem Bluetooth-Standard genügt.

10. Vorrichtung nach einem der Ansprüche 1 bis 9, wobei die Funkverbindung zwischen dem Schnurlostelekommunikationsgerät und der Basisstation dem HomeRF-Standard genügt.

11. Vorrichtung nach einem der Ansprüche 1 bis 10, wobei die Funkverbindung zwischen dem Schnurlostelekommunikationsgerät und der Basisstation dem WLAN-Standard genügt.

12. Vorrichtung nach einem der Ansprüche 1 bis 11, weiterhin umfassend:
eine Einrichtung (510, 610) zur Herstellung einer Datenverbindung zwischen dem Schnurlostelekommunikationsgerät und einem externen Computer (500) zur Anbindung des Computers an das Telekommunikationsnetz.

13. Vorrichtung nach Anspruch 12, wobei die Einrichtung zur Anbindung eines Computers einen USB-Steckverbinder (610) umfasst.

14. Vorrichtung nach einem der Ansprüche 1 bis 13, weiterhin umfassend:
eine Steuereinrichtung (410) zum Betreiben des Schnurlostelekommunikationsgeräts zum Aufbauen oder Abbauen der Funkverbindung zur Basisstation in Erwiderung auf ein Verbindungsaufbau- oder Verbindungsabbausignal des schnurgebundenen Telekommunikationsgeräts.
